# EUROPEAN PATENT APPLICATION

(11) **EP 1 762 967 A1**
(43) Date of publication of application: **14.03.2007**
(21) Application number: 05108221.2
(22) Date of filing: 07.09.2005
(51) Int. Cl.: G06Q 10/00

(54) **Dealer order processing**

(71) Applicant: SAP AG, 69190 Walldorf (DE)
(72) Inventor: Huber-Buschbeck, Andreas, 69253, Heiligkreuzsteinach (DE); von Helmolt, Hans-Ulrich, 69126, Heidelberg (DE); Luz, Patricia, 70372, Stuttgart (DE); Deeg, Günther, 66386, St. Ingbert (DE)
(74) Representative: Schneider, Günther Martin

(57) **Abstract**

A computer-implemented method for administrating a plurality of inventory data objects, representing inventories, whereby the inventory data objects are owned by several participants, wherein a first group of inventory data objects belongs to a first participant and further groups of inventory data objects belong to further participants, comprising: receiving, by the first participant, a customer order of products; checking the availability of the ordered quantity of products within a first group of inventory data objects; checking the availability of the ordered quantity of products within a further group of inventory data objects, if the ordered products were not found within the first group; repeating the checking for further groups until the ordered products were found or any further group is no longer available; and delivering the ordered quantity of products to the customer.

## Description

### BACKGROUND OF THE INVENTION

The present invention relates generally to methods and systems for managing the order and delivery processes within one or more e-business systems. Such an e-business system may comprise procurement systems, sales information systems, logistic information systems or supply chain management systems. More particularly, the present invention relates to methods and systems for managing inventory within at least one supply chain management system.

Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of controlling the flow of goods, services, information and/or finances between the involved parties such as manufactures, suppliers, wholesalers, retailers, and consumers. This process may include, among others, order processing, information feedback, and timely delivering the ordered goods and/or services.

One part of the supply chain management is the administration of the inventory in several warehouses, whereby the warehouses can be located with each participant, e.g. manufacturer, dealer, middleman or supplier which is involved in the supply chain. In this supply chain a participant can act either as a supplier or as a customer. Each participant manages his own inventory whereby the stock may be located with other participants.

### STATE OF THE ART

In supply chain management systems the stock is maintained as inventory data objects by the owner of the inventory. The owner of these inventory data objects has no information about inventory data objects which are owned by other participants within the supply chain management system. Furthermore the owner has no information about stock which is located with a third participant outside the company and maybe stored also as inventory data objects in another supply chain management system.

### SUMMARY OF THE INVENTION

In general, in one aspect, this invention provides a computer-implemented method for administrating a plurality of inventory data objects, the inventory data objects representing inventories, whereby the inventory data objects are owned either by a first participant or by further participants, wherein a first group of inventory data objects belongs to the first participant and further groups of inventory data objects in each case belong to one of the further participants, comprising:
receiving, by the first participant, a customer order, the order specifying a predetermined quantity of products,
determining a first group of inventory data objects,
searching the first group of inventory data objects for the ordered products,
checking the availability of the ordered quantity of products within the first group of inventory data objects,
determining a further group of inventory data objects,
searching the further group of inventory data objects for the ordered products,
checking the availability of the ordered quantity of products within the further group of inventory data objects,
repeating the determining, searching and checking for further groups until the ordered products were found or the checking confirms the ordered quantity of products or any further group of inventory data objects is no longer available, and
delivering the ordered quantity of products to the customer.

At first, the method checks whether or not the predetermined quantity of products is available within the in-house location. If the predetermined quantity of products is not available within the in-house location, the method checks whether the predetermined quantity of products is available within the external locations.

One advantage is that a first participant may take into account the inventory of further participants in order to fulfill a customer order. Therefore, the first participant has access to plurality of inventory data objects provided by further participants. If one of the further participants provides the ordered quantity of products, the first participant may forward the customer order to the further participant. The customer receives a confirmation of the customer order by the first participant.

Further embodiments of the invention can comprise the following features.

In one embodiment of the invention, searching the first group of inventory data objects comprises:
performing a product replacement for the ordered products if the ordered products were not found within the first group of inventory data objects, whereby an ordered product is replaced by another product concerning a replacement rule,
searching the first group of inventory data objects for the replaced products, and
repeating the product replacement and searching until the products were found or any replacement is no longer possible.

If the products are not found within the in-house location, a product replacement is performed in order to confirm the required quantity of products form the in-house location.

If the products were not found within the in-house location after performing several product replacements, the method further comprises
analyzing a plurality of criteria to establish a sequence of the further groups of inventory data objects.

The further groups of inventory data objects are searched for the required quantity of products according to a predetermined sequence. The criteria, which define this sequence may depend on different requirement e.g. transportation costs or distance between customer and dealer. Different requirements about the delivery may be considered by using different criteria e.g. if the ordered products should be delivered as fast as possible, the criterion may be the distance between customer and dealer.

In one embodiment of the invention, the criterion comprises at least one of:
geographical location of the participants, or
geographical distance between the participants and the customer, or
response time after receiving an customer order by the participants.

An inventory data object may comprise at least
an ID representative of the inventory data object,
an ID representative of the product location,
an ID representative of the product, and
a number representative of the available quantity.

The inventory data objects are stored as time series. Thus, the items of an inventory data object may vary over the time. Furthermore, the time series are used to estimate a demand forecast of required quantity of products.

In one embodiment of the invention, the available quantity of products within an inventory data object is reduced automatically if the availability check confirms the ordered quantity of products.

Furthermore, the inventive method comprises a plurality of methods for processing the inventory data objects and an interface for accessing the plurality of methods, whereby the methods for processing the inventory data objects are adapted for performing at least one of the following functions:
inserting inventory data objects,
updating inventory data objects,
removing inventory data objects,
reading inventory data objects,
searching the plurality of inventory data objects for one or more inventory data objects according to one or more search criteria,
displaying one or more inventory data objects, and
monitoring the plurality of inventory data objects.

Further, the methods for processing the inventory data objects and the interface are adapted to support online collaboration between the participants.

Several participants, dealers for example, may provide their inventory data objects to other participants, manufacturer for example. Thus, a manufacturer may access the inventory data objects of several dealers. This inventory data objects may included in the availability check if the in-house location does not confirm the required quantity of products. Therefore, the manufacturer is able to fulfill the customer order even if the in-house locations does not provide the ordered quantity of products.

Furthermore, the present invention provides a computer-framework for administrating a plurality of inventory data objects, the inventory data objects representing inventories, whereby the inventory data objects are owned either by a first participant or by further participants, wherein a first group of inventory data objects belongs to the first participant and further groups of inventory data objects in each case belong to one of the further participants, comprising
one ore more data storages to store the plurality of inventory data objects,
means for accessing and processing the plurality of inventory data objects,
a plurality of means for checking the availability of an ordered quantity of products within a plurality of inventory data objects, and
an interface providing concurrent access to the plurality of means.

In one embodiment of the invention, the means comprises:
means for receiving an customer order,
means for determining a group of inventory data objects,
means for searching a group of inventory data objects for the ordered products, and
means for checking the availability of the ordered quantity of products within a group of inventory data objects.

Further, the computer-framework comprise means for performing a product replacement for the ordered products if the ordered products were not found within the group of inventory data objects and means for analyzing a plurality of criteria to establish a predetermined sequence of a group of inventory data objects.

Furthermore, the invention comprises a computer readable storage medium comprising program code for performing:
determining a group of inventory data objects,
searching the group of inventory data objects for the ordered products,
checking the availability of the ordered quantity of products within the group of inventory data objects,
a product replacement for the ordered products if the ordered products were not found within a group of inventory data objects, and
analyzing a plurality of criteria to establish a sequence of groups of inventory data objects.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1: illustrates the business process according to the inventive method;
- Fig. 2: illustrates an overview of the inventive method;
- Fig. 3: illustrates a more detailed program flow of step 300 according to Fig. 2;
- Fig. 4: illustrates a more detailed program flow of step 360 according to Fig. 3;
- Fig. 5: illustrates a delivery process; and
- Fig. 6: illustrates an example of inventories with dealer and manufacturer.

### DETAILED DESCRIPTION

In a supply chain dealers are a special kind of business partners. They can either act as a customer or as a supplier for other customers. The interest of this disclosure is directed toward dealers who act as supplier whereby a manufacturer sells the products owned by the dealer by order of the dealer.

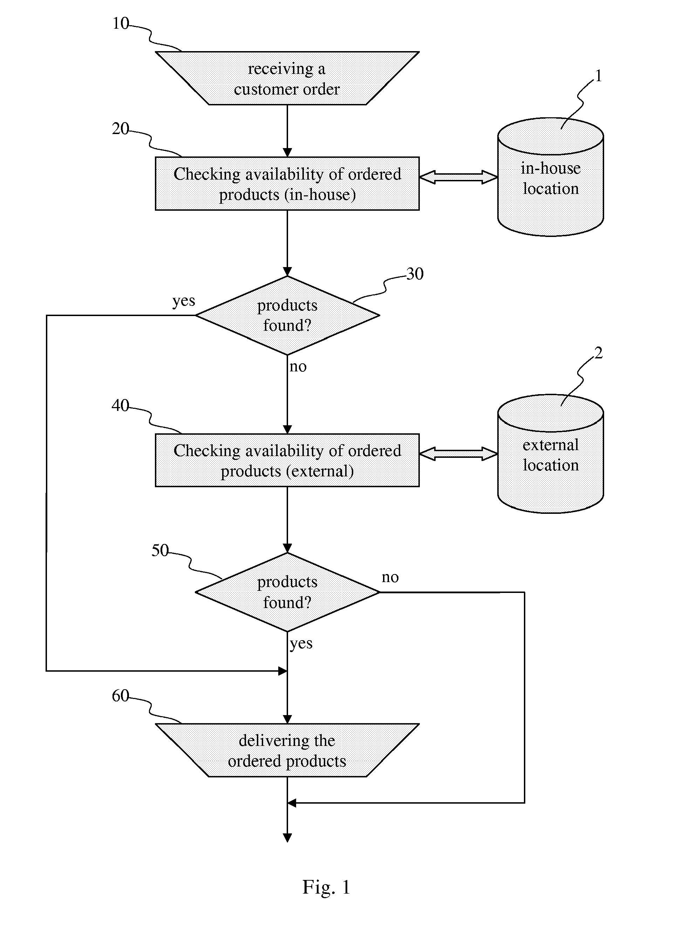

Fig. 1 gives an overview of the business process according to the inventive method. After receiving 10 a customer order by a first participant, the first participant checks 20 the availability of the ordered products in the in-house locations 1, whereby these in-house locations 1 can be different geographical locations. If the required quantity of products were not found 30 within the in-house locations 1, the process continues with process step 40, whereby the first participant checks the availability of the ordered products in several external locations 2. These external locations are owned by other participants.

The result of the step 40 is evaluated by the following step 50. If step 50 does not confirm the availability, the required quantity of products is neither available in the in-house locations 1 nor in the external locations 2. In this case, the business process can end by rejecting the customer order to the customer. In other embodiments the process can continue with additional processes to meet the customers demand.

If the process step 30 confirms the availability of the ordered products, the business process continues with step 60 by delivering the products from the in-house location 1 to the customer. If the availability of the ordered products were confirmed by step 50, the ordered products are delivered (also shown as step 60) from the external location 2 to the customer.

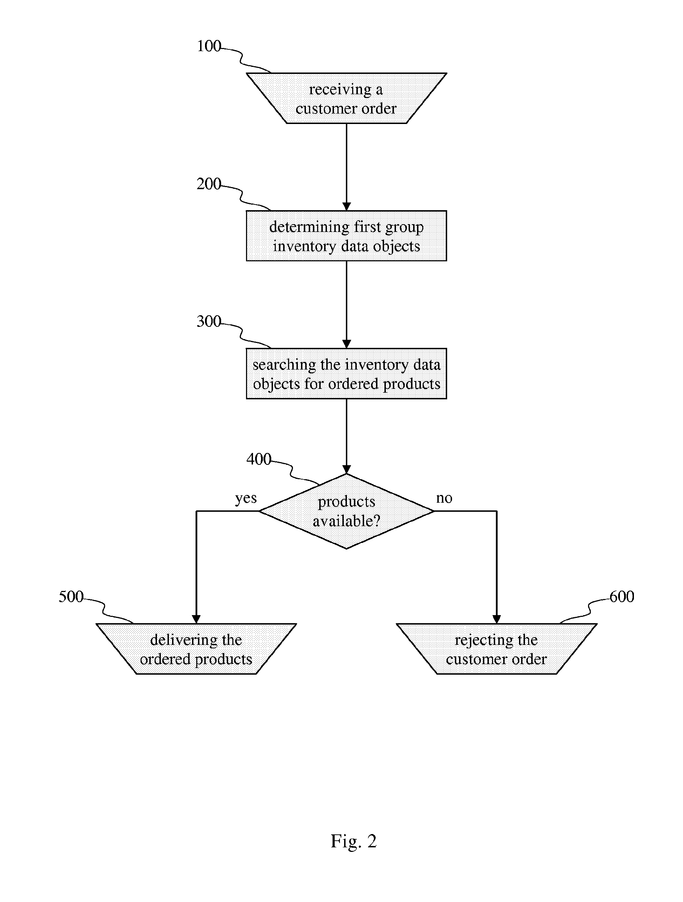

Fig. 2 gives an overview of the inventive method. In this embodiment the inventory is stored as inventory data objects within a supply chain management system. The inventory data objects comprise inventory data objects which are owned by different participants, e.g. supplier, dealer or manufacturer, within the supply chain management system. A first group of inventory data objects is owned by a first participant. Other groups of inventory data objects are owned by further participants, whereby the further groups of inventory data objects in each case belong to one of the further participants. The supply chain management system is located with the first participant, whereby the first participant has at least read access to all inventory data objects.

The inventory data objects of the first group belong to a first location - the in-house location of the first participant. Further groups of inventory data objects belong to further locations - the external locations.

An inventory data object is stored as a data structure which comprises at least the following items:
1. an ID representative of the inventory data object,
2. an ID representative of the product,
3. a number representative of the available quantity, and
4. an ID representative of the product location.

The first item is the unique identifier of an inventory data object. The second item is the identifier of the product within an inventory data object and the third item represent the available quantity of the product stored in an inventory data object.

The fourth item stores information about the product location. In this embodiment three different values are used to differentiate several types of locations:
1. Loc₁ for in-house locations,
2. Loc₂ for external locations,
3. Loc₃ for external locations which are handled by the availability check within the supply chain management system like in-house locations.

The inventive method starts by receiving, by the first participant, a customer order 100 as an electronic order transmitted by email or a traditional order transmitted by mail. The customer order specifies at least a predetermined quantity of products. The first participant feeds the data about the customer order into the supply chain management system which processes this order.

Continuing with step 200, the method determines a first group of inventory data objects. This first group of inventory data objects comprises those inventory data objects which have stored the value Loc₁ or Loc₃ within the fourth item of the above mentioned data structure.

After determining the first group of inventory data objects, the method performs the next step 300 of searching the first group of inventory data objects and, if required, further groups of inventory data objects for the ordered products.

The following step 400 evaluates whether or not the ordered products are available. If they are available, the products are delivered to the customer depending on which location has confirmed the required quantity during the availability check. Otherwise, the customer order is rejected 600 by the first participant to the customer.

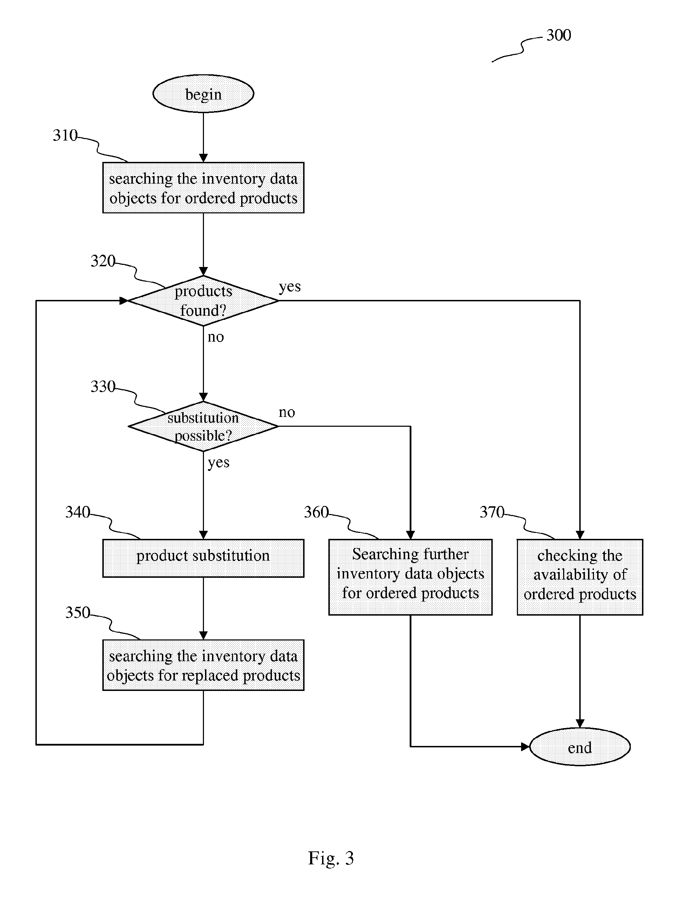

The next Fig. 3 shows a more detailed program flow of step 300 shown in Fig. 2. This part of the inventive method begins with step 310 by searching the first group of inventory data objects for the ordered product. The result of this search step is evaluated by the next step 320.

If the searched product was found, the step 370 checks the availability of this product considering the third item of the data structure with respect to this product. Otherwise, if the product was not found, the method continues with step 330. This step checks whether a product replacement is possible. If it is possible a product replacement will be done by the following step 340.

In this embodiment a product replacement replaces the ordered product by another product concerning one or more replacement rules. One replacement rule may be 'products with same price' or another rule could may be 'products with same measure'. Other rules for the product replacement are also possible.

In the next step 350 the inventory data objects are searched for the replaced product in the same way as in step 310. After step 350 the method returns to step 320. The loop between step 320 and step 350, comprising the steps 330 and 350, is repeated until the searched product was found or any product replacement is no longer possible.

If no further product replacement is possible, the method goes from step 330 to step 360. This step 360 performs a sub-method of searching further groups of inventory data objects for the ordered product.

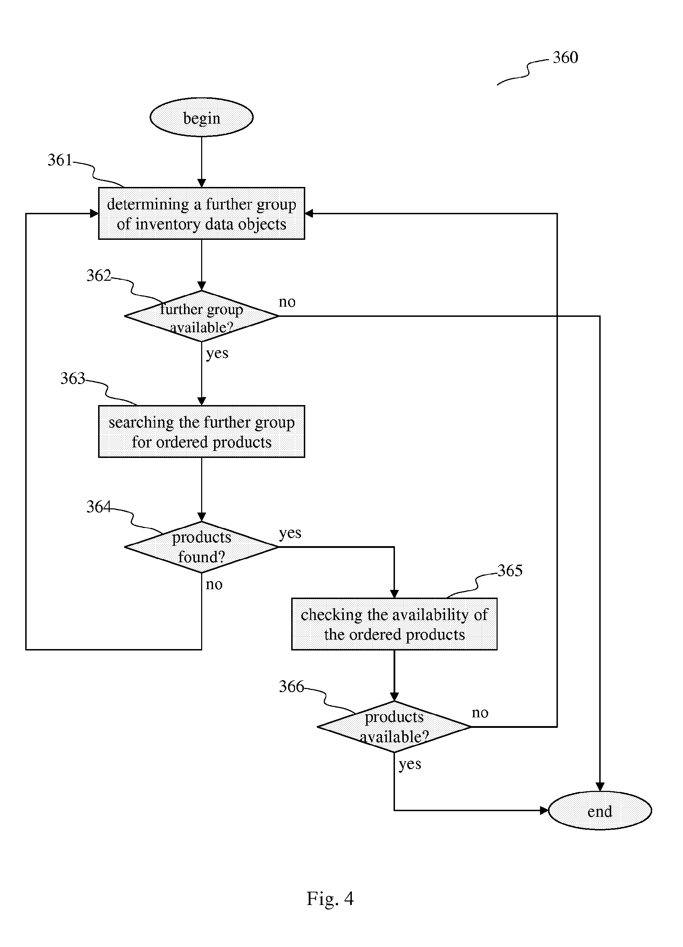

The following Fig. 4 shows the program flow of this step 360. Beginning with step 361, the method determines a further group of inventory data objects. This further group does not comprise the inventory data objects which are searched in the previous steps 310 - 350. In this embodiment the further group comprises inventory data objects which have the value Loc₂ in the fourth item of the above mentioned data structure. If step 361 has found further inventory data objects, what is evaluated in step 362, the method proceeds with step 363. This step 363 searches the further inventory data objects for the ordered, not for the replaced, product. Unlike the previous steps 310 to 350, the step 363 does not perform any product replacement during the search.

If the product was found, what is evaluated in step 364, the process continues with step 365 by checking the availability in the same manner than the step 370 shown in Fig. 3. The availability is evaluated in the following step 366. If the product is available within this further group of inventories, this sub-method is left and the method returns to step 400 shown in Fig. 2.

If no product is found, the method returns after step 364 to step 361. A further determination of a group of inventory data objects will be done. The method passes through the steps 361 to 364 until the searched product was found within the viewed inventory data objects or any group of inventory data objects is no longer available. In this embodiment where only one external location Loc₂ is defined the method passes the loop once only. In the second loop the method leaves the sub-method and returns to step 400 shown in Fig. 2.

In other embodiments the step 361 determines more than one group of inventory data objects at once. These groups are ordered by one ore more criteria. The criterion comprises:
- the geographical location of the participants or
- the geographical distance between the participants and the customer or
- the response time after receiving an customer order by the participants.

The following steps 362 to 364 process the groups of inventory data objects in the order determined by step 361.

The above mentioned steps which are checking the availability reduce the available quantity of products within the inventory data objects if the availability check confirms the required quantity of products.

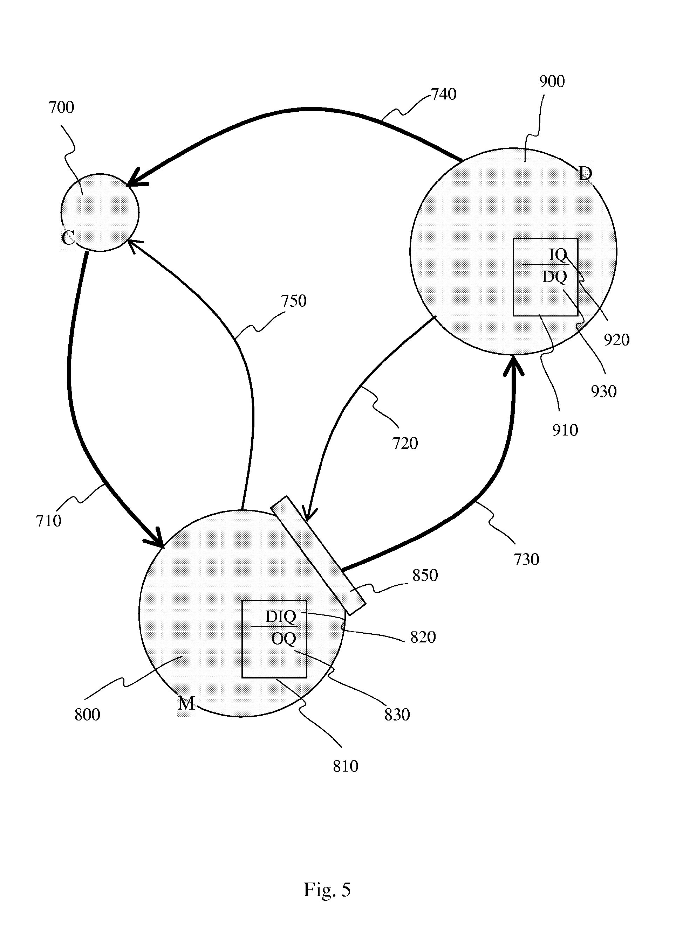

Fig. 5 illustrates an overview of a delivery process for the case that the customer order cannot be fulfilled by the manufacturer. The customer 700 sends 710 an order to the manufacturer 800, the manufacturer 800 forwards 730 the relevant part of this customer order to the dealer 900 who delivers 740 the ordered goods according to the relevant part of the customer order to the customer 700. The manufacturer sends 750 a confirmation of the customer order to the customer 700. In this embodiment the manufacturer 800 is representing a first participant and the dealer 900 is representing a second participant.

The customer 700 places an order 710 of a predetermined quantity of goods with the manufacturer 800. The order may be an electronic order transmitted by email or a traditional order transmitted by mail. The order comprises at least information about the ordered products and quantity. The manufacturer 800 feeds the data about the order into a supply chain management system which processes this order.

The dealer 900 is sending 720 his own inventory data 910 to the supply chain management system of the manufacturer 800 using the interface 850 which is located with the supply chain management system. The dealer may also use a supply chain management system or any other computer-system, e.g. Microsoft® Excel, which is able to establish a connection to the interface 850.

At manufacturer' place 800, the transferred inventory data is stored in a inventory data object 810. A multiple of inventory data objects 810 are stored as time series in one or more data storages. In this embodiment an inventory data object comprises at least the following items:
1. an ID representative of the inventory data object;
2. an ID representative of the owner of the inventory data object;
3. a ID representative of a product;
4. a number representative of the product allocation within this inventory data object (DIQ - Dealer Inventory Quantity);
5. a number representative of the sold quantity of products within the product allocation (OQ - Ordered Quantity).

The first item is the unique identifier of the stored inventory data object. The second item is representing the owner of this inventory data object. In other embodiments further dealers may participate in the supply chain. So it would be possible that more dealers are providing their inventory data to the manufacturer 800. Therefore it is necessary to store the unique identifier of the dealer which owns the inventory data object. The third item represents the unique identifier of the stored product within a inventory data object. The fourth item 820 (DIQ) specifies the product allocation - the quantity of products - of the product within the inventory data object. The fifth item 830 (OQ) represents the sum of the confirmed quantities by the availability checks with respect to this product. The available quantity is given by the difference between the entry of item four and the entry of item five. In one embodiment, checking the availability has to be done against this difference whereby the new available quantity is given by increasing the quantity stored in item five.

In other embodiments the fifth item may not be stored within the inventory data object. In this case the fourth item is representing the available quantity of goods and the above mentioned availability check has to perform a check against item four whereby the new available quantity is given by decreasing the quantity stored in item four.

Since the inventory data objects are stored as time series, the dealer has the option to maintain different dealer inventory data objects for one product with respect to different time periods e.g. months. So it would be possible that a dealer provides a quantity of N for a first month and a quantity of M for a second month of a product to the manufacturer. The above mentioned availability check will be done with respect to the viewed time period.

As shown in Fig. 5, the stock is located with the dealer 900. In this embodiment the dealer 900 uses also a supply chain management system. The stock is stored within this supply chain management system as inventory data objects 910 which comprises at least a first item 920 (IQ - Inventory Quantity) representative of the quantity of products on stock and a second item 930 (DQ - Delivered Quantity) representative of the delivered quantity of products. After receiving the forwarded relevant part of a customer order, the supply chain management system with the dealer 900 performs an availability check against the inventory data objects 910. This second availability check is necessary because the inventory with the dealer 900 must not be the same as the dealer inventory with the manufacturer 800.

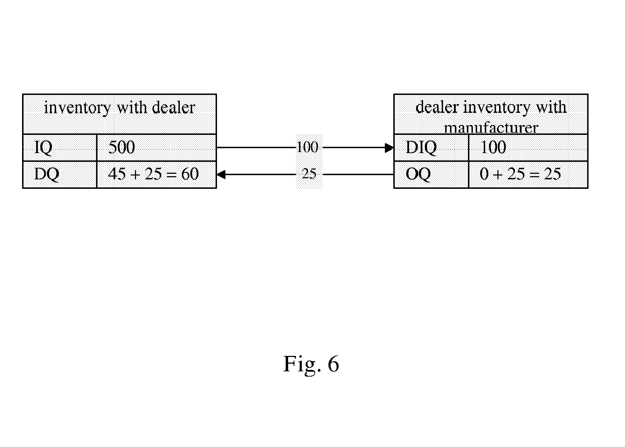

The example of Fig. 6 illustrates the inventory 910 with dealer 900, and the dealer inventory 810 with manufacturer 800. The dealer has 500 pieces of a product on the stock whereby 45 pieces are already sold. The dealer provides 100 pieces of these 500 pieces to the manufacturer. Initially the ordered quantity OQ is set equal to 0. After the availability check for 25 required pieces, the ordered quantity OQ is set equal to 25 (0 + 25). The customer order of 25 pieces is forwarded by the manufacturer to the dealer. After delivering the ordered 25 pieces, the delivered quantity DQ is increased to 60 (45 + 25). This example 1 makes clear that the delivered quantity DQ changes even if no customer order is forwarded by the manufacturer. The dealer can sell his own products directly to his customer without having received a customer order from the manufacturer. In this example, the dealer sold 45 pieces before the customer order of 25 pieces.

In a preferred embodiment the dealer 900 has to send an update of his new reduced available quantity to the manufacturer 800 after a delivery process. This update may be done simultaneously or delayed. If the update is done in a delayed manner, a product shortage is possible and has to be handled by the dealer. In both cases the dealer 900 uses the interface 850 provided by the supply chain management system located with the manufacturer 800.

The interface 850 provides access to at least one of the following methods, whereby the methods may be part of the supply chain management system:
1. inserting one or more inventory data objects into a plurality of data storages;
2. updating one or more inventory data objects;
3. removing an inventory data object from the data storages;
4. reading inventory data objects;
5. searching the plurality of inventory data objects for one or more inventory data objects with one or more search criteria;
6. displaying one or more inventory data objects;
7. monitoring the plurality of inventory data objects.

The first 3 methods support the update process performed by a dealer. These 3 methods are available only for the owner of the inventory data objects or for the manufacturer. The first method provides inserting of a new inventory data object into a data storage. The second method provides updating of a plurality or of one dedicated inventory data object respectively. With method 3, a dealer may remove an inventory data object from the data storages.

Methods 4 to 7 provide access to inventory data objects which are owned by other dealers. So it is possible to read and display inventory data objects which are owned by other dealers. Method 5 allows searching the plurality of inventory data objects for one or more inventory data objects according to one or more search criteria. It is also possible to get an overview which dealer can provide a specific product.

Therefore, the manufacturer 800 sells the products to his own customer 700 in order of the dealer 900, whereby the ordered products, which are located with the dealer and managed within the supply chain management system with the manufacturer, are delivered by the dealer to the customer. Furthermore, the interface 850 provides access to the inventory data objects stored with the manufacturer and owned by different dealers. A dealer may also read inventory data objects which are owned by other dealers.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

## Claims

1. A computer-implemented method for administrating a plurality of inventory data objects, the inventory data objects representing inventories, whereby the inventory data objects are owned either by a first participant or by further participants, wherein a first group of inventory data objects belongs to the first participant and further groups of inventory data objects in each case belong to one of the further participants, comprising:
receiving, by the first participant, a customer order, the order specifying a predetermined quantity of products;
determining a first group of inventory data objects;
searching the first group of inventory data objects for the ordered products;
checking the availability of the ordered quantity of products within the first group of inventory data objects;
determining a further group of inventory data objects;
searching the further group of inventory data objects for the ordered products;
checking the availability of the ordered quantity of products within the further group of inventory data objects;
repeating the determining, searching and checking for further groups until the ordered products were found or the checking confirms the ordered quantity of products or any further group of inventory data objects is no longer available; and
delivering the ordered quantity of products to the customer.

2. The method of claim 1 wherein searching the first group of inventory data objects comprises:
performing a product replacement for the ordered products if the ordered products were not found within the first group of inventory data objects, whereby an ordered product is replaced by another product concerning a replacement rule;
searching the first group of inventory data objects for the replaced products; and
repeating the product replacement and searching until the products were found or any replacement is no longer possible.

3. The method of claim 2 further comprising:
analyzing a plurality of criteria to establish a sequence of the further groups of inventory data objects.

4. The method of claim 3 wherein the criterion comprises at least one of:
geographical location of the participants; or
geographical distance between the participants and the customer; or
response time after receiving an customer order by the participants.

5. The method of one of the preceding claims, wherein an inventory data object comprises at least
an ID representative of the inventory data object;
an ID representative of the product location;
an ID representative of the product; and
a number representative of the available quantity.

6. The method of claim 5 wherein the inventory data objects are stored as time series.

7. The method of one of the preceding claims, wherein the available quantity of products within an inventory data object is reduced automatically if the availability check confirms the ordered quantity of products.

8. The method of one of the preceding claims, further comprising a plurality of methods for processing the inventory data objects and an interface for accessing the plurality of methods.

9. The method of claim 8, wherein the methods for processing the inventory data objects are adapted for performing at least one of the following functions:
inserting inventory data objects;
updating inventory data objects;
removing inventory data objects;
reading inventory data objects;
searching the plurality of inventory data objects for one or more inventory data objects with one or more search criteria;
displaying one or more inventory data objects; and
monitoring the plurality of inventory data objects.

10. The method of claim 9, wherein the methods for processing the inventory data objects and the interface are adapted to support online collaboration between the participants.

11. A computer-framework for administrating a plurality of inventory data objects, the inventory data objects representing inventories, whereby the inventory data objects are owned either by a first participant or by further participants, wherein a first group of inventory data objects belongs to the first participant and further groups of inventory data objects in each case belong to one of the further participants, comprising
one ore more data storages to store the plurality of inventory data objects;
means for accessing and processing the plurality of inventory data objects;
a plurality of means for checking the availability of an ordered quantity of products within a plurality of inventory data objects; and
an interface providing concurrent access to the plurality of means.

12. The computer-framework of claim 8 wherein the means comprises:
means for receiving an customer order;
means for determining a group of inventory data objects;
means for searching a group of inventory data objects for the ordered products; and
means for checking the availability of the ordered quantity of products within a group of inventory data objects.

13. The computer-framework of claim 9 further comprising
means for performing a product replacement for the ordered products if the ordered products were not found within the group of inventory data objects.

14. The computer-framework of claim 10 further comprising
means for analyzing a plurality of criteria to establish a predetermined sequence of a group of inventory data objects.

15. The framework of one of the preceding claims, wherein the interface further comprises access to methods for maintaining and monitoring inventory data objects.

16. A computer readable storage medium comprising program code for performing:
determining a group of inventory data objects;
searching the group of inventory data objects for the ordered products; and
checking the availability of the ordered quantity of products within the group of inventory data objects.

17. The computer readable storage media of claim 13 further comprising program code for performing:
performing a product replacement for the ordered products if the ordered products were not found within a group of inventory data objects.

18. The computer readable storage media of claim 14 further comprising program code for performing:
analyzing a plurality of criteria to establish a sequence of groups of inventory data objects.
